Europäisches Patentamt

European Patent Office

Office européen des brevets

(19)

(11) Veröffentlichungsnummer : **0 340 273 B1**

(12) **EUROPÄISCHE PATENTSCHRIFT**

(45) Veröffentlichungstag der Patentschrift :
01.04.92 Patentblatt 92/14

(51) Int. Cl.⁵ : **A01B 51/02,** A01B 69/00,
A01B 79/00, A01B 73/06

(21) Anmeldenummer : 88909702.8

(22) Anmeldetag : 11.11.88

(86) Internationale Anmeldenummer :
PCT/AT88/00095

(87) Internationale Veröffentlichungsnummer :
WO 89/04115 18.05.89 Gazette 89/11

(54) EINRICHTUNG ZUM BEARBEITEN VON LANDWIRTSCHAFTLICHEN NUTZFLÄCHEN.

(30) Priorität : 11.11.87 AT 2979/87

(43) Veröffentlichungstag der Anmeldung :
08.11.89 Patentblatt 89/45

(45) Bekanntmachung des Hinweises auf die
Patenterteilung :
01.04.92 Patentblatt 92/14

(84) Benannte Vertragsstaaten :
AT CH DE FR GB IT LI NL SE

(56) Entgegenhaltungen :
DE-A- 3 332 043
DE-A- 3 341 967
DE-A- 3 347 521
FR-A- 1 598 533
GB-A- 857 731
US-A- 1 394 651

(73) Patentinhaber : ALBRECHT, Walter
Seeberg 17
A-3340 Waidhofen/Ybbs (AT)

(72) Erfinder : ALBRECHT, Walter
Seeberg 17
A-3340 Waidhofen/Ybbs (AT)

(74) Vertreter : Weinzinger, Arnulf, Dipl.-Ing. et al
Patentanwälte Dipl.-Ing. Helmut Sonn Dr.
Heinrich Pawloy Dipl.-Ing. Arnulf Weinzinger
Riemergasse 14
A-1010 Wien (AT)

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zum Bearbeiten von landwirtschaftlichen Nutzflächen, mit einem länglichen, an einem Mittelpfahl drehbar gelagerten Träger, an dem wenigstens ein in Längsrichtung des Trägers verfahrbarer Geräte-Tragschlitten angebracht ist, der mit einer ihn bzw. ein an ihm befestigtes Gerät bei Drehung des Trägers längs einer allgemein kreisförmigen, insbesondere spiralförmigen Bahn um den Mittelpfahl herum steuernden Steuereinrichtung gekuppelt ist.

Aus der AT-B-364 659 ist eine Einrichtung bekannt, bei der beidseits der zu bearbeitenden Fläche zueinander parallele Schienen angeordnet sind, auf denen ein brückenartiger Träger, der die Fläche überspannt, hin- und hergehend verfahrbar ist. Auf dem brückenartigen Träger ist eine Laufkatze verfahrbar angeordnet, für die eine Rechnersteuerung vorgesehen ist, und diese Laufkatze ist als Geräte-Träger ausgebildet, an dem die jeweiligen Geräte, z.B. Pflanzensetzgeräte, Geräte zum Jäten von Unkraut oder dergl. Arbeitsgeräte, befestigt werden. Eine solche Einrichtung hat den Vorteil, daß eine Bodenverdichtung vermieden wird, wie sie bei an Traktoren oder dergl. landwirtschaftlichen Fahrzeugen montierten Arbeitsgeräten beim Fahren über die Nutzfläche zufolge des Gewichts dieser Fahrzeuge unvermeidlich ist. Von Nachteil ist jedoch bei dieser bekannten Einrichtung, daß die beschriebene Parallelführung nicht nur einen verhältnismäßig großen konstruktiven Aufwand, sondern vor allem auch Probleme beim Verfahren der Brücke mit sich bringt, da es bei einem nicht genau synchronen Antrieb auf beiden Seiten leicht zu einem Verkanten und Pestfressen der die Brücke tragenden Wagen auf den Schienen kommt. Weiters ist diese bekannte Einrichtung praktisch nur für ganz ebene Nutzflächen einsetzbar, da die beiden Schienen notwendigerweise exakt parallel zueinander verlaufen müssen.

Aus der DE-A-33 32 043 ist ein "Gartenroboter" bekannt, bei dem ein Arbeitsgerät mit Hilfe eines Seils verschiebbar an einem Rohrträger montiert ist, der an einem Mittelpfahl drehbar gelagert ist, sich von diesem radial wegerstreckt und sich am vom Mittelpfahl abgewandten äußeren Ende auf einem Rad abstützt. Die GB-A-857 731 zeigt eine Einrichtung der eingangs angegebenen Art, mit einem drehbaren Träger an einem Mittelpfahl und einem am Träger über eine Endloskette verschiebbaren Schlitten, der ein Arbeitsgerät trägt, ähnlich wie beim Gartengerät gemäß der DE-A-33 32 043. Bei diesen Konstruktionen wird die Führung des Trägers bei seiner Bewegung nur von einem Ende her, mit Hilfe des Mittelpfahls, bewerkstelligt, so daß keine Probleme durch Verkanten oder dergl. auftreten können, und das jeweilige Gerät wird längs einer Spiralbahn bewegt. Allerdings wirkt sich für den Betrieb häufig der Umstand, daß das jeweilige am Tragschlitten befestigte Arbeitsgerät, bedingt durch die Mittel zur Befestigung am Tragschlitten, in der Regel in Arbeitsrichtung gesehen hinter dem Träger nachgeführt wird, nachteilig aus.

Ziel der Erfindung ist es nun, eine verbesserte Einrichtung der eingangs angegebenen Art zu schaffen, die einfach im Aufbau sowie problemlos zu führen ist, und die sich insbesondere auch für unebenes Gelände eignet.

Die erfindungsgemäße Einrichtung der eingangs angeführten Art ist dadurch gekennzeichnet, daß der Träger an einem Mittelpfahl drehbar gelagerten Galgen befestigt ist, der gemäß einer vom Mittelpfahl ausgehenden Radialebene angeordnet ist, wobei der Träger mit seiner Längsachse in Abstand vom Mittelpfahl verlaufend am Galgen im rechten Winkel zu diesem angeschlossen ist. Mit einer derartigen Ausbildung kann einerseits eine stabile Drehlagerung der Trägers am Mittelpfahl ersielt werden, und andererseits kann auch problemlos die Anordnung so getroffen werden, daß das Gerät im wesentlichen auf einem vom Mittelpfahl ausgehenden Radius liegend eingesetzt wird, wodurch Nachlaufprobleme vermieden werden, wie sie sonst aufgrund der kreis- oder spiralförmigen Bahn bei der Arbeitsbewegung auftreten könnten.

Die erfindungsgemäße Einrichtung kann ohne Schwierigkeiten außerordentlich einfach und leichtgewichtig ausgebildet werden, und sie ist rasch zu montieren, wobei es überdies auch möglich ist, zwecks Anpassung an ein abschüssiges Gelände den Mittelpfahl entsprechend schräg im Boden zu verankern, so daß er im wesentlichen senkrecht auf die Bodenebene steht. In der Folge eignet sich die erfindungsgemäße Einrichtung auch vorteilhaft für eine mobile Ausbildung, da die Einrichtungsteile verhältnismäßig einfach und rasch abgebaut, verladen, transportiert und wieder zusammengebaut werden können.

Zur Anpassung an örtlichen Bodenunebenheiten ist es bei der erfindungsgemäßen Einrichtung auch günstig, wenn der Träger am Galgen vertikal schwenkbar gelagert ist.

Es sei noch erwähnt, daß es beispielsweise aus der GB-A- 1 104 082 und GB-A-797 245 sowie der US-A-3 963 192 bereits bekannt ist, selbstfahrende Arbeitsmaschinen, nämlich Rasenmäher, an einem Seil zu befestigen, das sich von einer mittigen Abwickelvorrichtung abwickelt und dadurch den selbstfahrenden Rasenmäher spiralförmig von innen nach außen fahren läßt. Dabei kann der Rasenmäher jedoch leicht an einem Hindernis hängen bleiben, wieder einwärts fahren, kippen und umstürzen, so daß keine genügende Punktionssicherheit gegeben ist. Außerdem fährt die Arbeitsmaschine selbst auf dem Boden, mit dem beschriebenen Nachteil der unerwünschten Bodenverdichtung im Fall von schwereren Fahrzeugen und Arbeitsgeräten.

Für die Drehlagerung ist es bei der erfindungsgemäßen Einrichtung weiters von Vorteil, wenn der Galgen über zwei in axialem Abstand übereinander auf den Mittelpfahl aufgeschobene Hülsen am Mittelpfahl gelagert ist. Der Abstand zwischen den beiden Hülsen sollte dabei möglichst groß sein, d.h. die eine Hülse wird sich in der Regel knapp über dem Boden befinden, wogegen die andere, obere Hülse im oberen Endbereich des Mittelpfahls ihren Sitz hat. Der Abstand bzw. die Höhe des Mittelpfahls kann dabei je nach den Erfordernissen, nach den Abmessungen und dem Gewicht des Trägers festgelegt werden.

An sich kann der Tragschlitten bei seiner Bewegung längs des Trägers ähnlich wie bei der Einrichtung gemäß der AT-PS 364 659 mit Hilfe eines Rechners gesteuert werden, um so während der Drehbewegung des Trägers z.B. eine sich spiralförmig windende Bahn des Arbeitsgerätes oder aber eine Bahn in Form einer Vielzahl von konzentrischen Kreisen (wenn jeweils nach einer Umdrehung des Trägers der Tragschlitten sprungartig versetzt wird) zu erhalten. Dabei ist es auch denkbar, mehrere spiralförmige Bahnen ineinander vorzusehen, etwa zwei Pflanzreihen in einer Doppelspirale anzubringen, wobei die Pflanzen in den verschiedenen Reihen zu verschiedenen Zeiten gesät oder gesetzt werden und so in den verschiedenen Spiralen verschiedene Bearbeitungsgänge, z.B. Pflügen, Säen oder Walzen im einen Fall und Hacken, Lockern, Unkrautmähen oder -jäten im anderen Fall, vorgenommen werden können.

Eine besonders einfache, robuste und wirkungsvolle Ausbildung der Steuereinrichtung kann erzielt werden, wenn die Steuereinrichtung für den Tragschlitten durch ein Seil gebildet ist, das mit einem Ende am Tragschlitten befestigt ist, längs des Trägers nach innen und über eine Umlenkrolle im Bereich der Verbindung des Trägers mit dem Galgen sowie von dieser Umlenkrolle längs des Galgens zum Mittelpfahl verläuft und dort mit dem anderen Ende an einer am Mittelpfahl drehfest angebrachten Aufwickelspule befestigt ist. Bei einer solchen Ausbildung wird der Tragschlitten bei einer Drehung des Trägers um den Mittelpfahl automatisch längs des Trägers beispielsweise von außen nach innen gezogen, da sich das Seil auf der Aufwickelspule aufwickelt. Im Fall, daß das Seil vom Tragschlitten weg zunächst zum äußeren Ende des Trägers und von dort, beispielsweise um eine Umlenkrolle, zurück zum inneren Ende des Trägers geführt wird, kann ein Bewegen des Tragschlittens von innen nach außen erzielt werden. Durch den Durchmesser der Aufwickelspule wird die Ganghöhe des spiralförmigen Bahn, d.h. der Reihenabstand, festgelegt. Zweckmäßigerweise sollte dabei die Aufwickelspule derart bemessen sein, daß das Seil nur in einer Lage auf ihr aufgewickelt wird, so daß eine einheitliche Ganghöhe von innen nach außen bzw. von außen nach innen erzielt wird.

Um das Seil beim Ziehen des Tragschlittens immer gespannt zu halten, ist es auch günstig, wenn der Tragschlitten eine mit dem Träger in Eingriff stehende, vorzugsweise in der Bremskraft einstellbare Bremse aufweist.

Vorteilhafterweise ist die Aufwickelrolle am Mittelpfahl abnehmbar befestigt. Weiters ist es, um verschiedene Reihenabstände zu ermöglichen, von Vorteil, wenn mehrere Aufwickelspulen vorgesehen sind, die verschiedene Durchmesser, entsprechend den jeweiligen Ganghöhen der spiralförmigen Bahn, aufweisen. Um mehrere spiralförmige Bahnen ineinander vorsehen zu können, ist es auch günstig, wenn die Aufwickelspule(n) hinsichtlich des Befestigungspunktes des Seiles in verschiedenen Winkelstellungen am Mittelpfahl fixierbar ist (sind). Beispielsweise ist es denkbar, für die Aufwickelspule zwei um 180° zueinander versetzte Stellungen am Mittelpfahl vorzusehen und die Fixierung dabei mit Hilfe eines Bolzens oder eines Splints zu bewerkstelligen.

Für die Führung des Tragschlittens längs des Trägers hat sich bei einer Ausführungsform, bei der die Steuereinrichtung für den Tragschlitten durch eine Endlos-Kette gebildet ist, die mit dem Tragschlitten verbunden und über Umlenkrollen an den Trägerenden geführt ist, als vorteilhaft erwiesen, wenn die Endloskette über weitere Umlenkrollen und längs des Galgens zu einem am Mittelpfahl drehfest angebrachten Kettenrad geführt ist. Bei dieser Ausbildung ergibt sich somit in beiden Bewegungsrichtungen des Tragschlittens eine Zwangsteuerung, wozu es weiters günstig ist, wenn die Endlos-Kette wahlweise mit dem einen oder anderen Trum mit dem Tragschlitten kuppelbar ist.

Zur Erzielung unterschiedlicher Ganghöhen bei der Spiralbahn ist es hier auch von Vorteil, wenn mehrere verschieden große Kettenräder am Mittelpfahl befestigt sind.

Um die Kette gespannt zu halten, ist es ferner vorteilhaft, wenn am äußeren Ende des Trägers eine Spannvorrichtung für die Kette vorgesehen ist.

Um örtliche Bodenunebenheiten auszugleichen, sowie um dem Umstand Rechnung zu tragen, daß für verschiedene Geräte verschiedene Höhen relativ zum Boden erforderlich sein können, ist es günstig, wenn am Tragschlitten ein auf und ab schwenkbarer Parallelogrammlenker zur Befestigung der Geräte angebracht ist, der die Geräteposition im wesentlichen auf einer vom Mittelpfahl ausgehenden, parallel zum Träger verlaufenden Radiuslinie festlegt, wobei die Geräteausrichtung dabei senkrecht zu dieser Radiuslinie ist.

Vorzugsweise ist der Träger als Fachwerksträger ausgebildet, der zwei zueinander parallele Längsrohre aufweist, an denen außen der Tragschlitten mittels Rollen geführt ist, wobei die durch die zwei Längsrohre definierte Ebene den Mittelpfahl im wesentlichen in Bodenhöhe schneidet. Bei dieser Ausbildung können die bei der Bodenbearbeitung auftretenden Kräfte günstig aufgenommen werden, und es wird eine einfache Führung des Tragschlittens erzielt.

Bei größeren Konstruktionen wird jedoch statt eines ebenen ein räumlicher Fachwerksträger vorzuziehen sein.

Im Fall von größeren landwirtschaftlich zu nutzenden bzw. zu bearbeitenden Bodenflächen kann der Träger aus mehreren miteinander gekuppelten bzw. kuppelbaren Trägersektionen bestehen. Beispielsweise hat sich eine Modulbauweise mit jeweils 6 m langen Trägersektionen als günstig erwiesen.

Für eine rasche Montage bzw. Demontage sowie für einen einfachen Transport ist es hier von besonderm Vorteil, wenn der Träger aus miteinander schwenkbar verbundenen Trägersektionen besteht, wobei an jedem der beiden Enden eines Mittelstücks des Trägers eine im Vergleich zum Mittelstück lange Trägersektion angelenkt ist und die beiden langen Trägersektionen in die gleiche Richtung in eine Transportstellung senkrecht zum Mittelstück umklappbar sind, so daß der Träger in dieser Transportstellung in Draufsicht eine U-Form hat. Im Fall von besonders langen Trägern ist es hier ferner vorteilhaft, wenn an jeder der beiden langen Trägersektionen eine weitere, in das Innere des "U" umklappbare Trägersektion angelenkt ist.

Für eine besonders effektive Bodenbearbeitung können selbstverständlich auch mehrere Tragschlitten am Träger angebracht und je mit einer eigenen Steuereinrichtung gekuppelt sein.

Bei kleineren Flächen und dementsprechend kürzeren Abmessungen des Trägers kann der Träger ferner einfach mit seinem äußeren Ende frei auskragen.

Um den Träger jedoch hinsichtlich seines Eigengewichtes über ein Rad zu entlasten und dabei zu vermeiden, daß beim Umlaufen des Trägers am Rad seitliche Kräfte auftreten, hat es sich als vorteilhaft erweisen, wenn der Träger am äußeren Ende über wenigstens ein auf dem Boden laufendes Rad abgestützt ist, das mit seiner Bodenkontaktstelle im wesentlichen auf einer durch den Mittelpfahl verlaufenden, zum Träger parallelen Radiuslinie gehalten ist.

Bei dieser Ausbildung kann auch mit Vorteil eine Antriebseinrichtung für das Rad, wie z.B. ein Dieselmotor, ein Elektromotor oder dergl., vorgesehen werden. Es ist aber auch denkbar, am äußeren Ende des Trägers ein Zugtier einzuspannen.

Es ist ferner zweckmäßig, das Rad mit einer Nachlaufeinrichtung zu versehen, so daß sich das Rad immer tangential, d.h. senkrecht zu einem durch den Mittelpfahl verlaufenden Radius, ausrichtet, wenn der Träger um den Mittelpfahl herum gedreht wird. Derartige Nachlaufeinrichtungen sind an sich, etwa aus der Kraftfahrzeugtechnik, bekannt.

Schließlich ist es hier auch günstig, wenn ein Rad zur direkten Aufnahme der Last des Trägers im wesentlichen vertikal unterhalb des äußeren Endes des Trägers angeordnet ist.

Die Erfindung wird nachstehend anhand von in der Zeichnung dargestellten bevorzugten Ausführungsbeispielen, auf die sie jedoch nicht beschränkt sein soll, noch weiter erläutert. Es zeigen:

Fig. 1 eine schaubildliche Ansicht einer Ausführungsform der erfindungsgemäßen Einrichtung, bei der das Arbeitsgerät gemäß einer spiralförmigen Bahn auf der zu bearbeitenden Fläche bewegt wird;

Fig. 2 eine Draufsicht auf diese Einrichtung, wobei der äußere Teil der Einrichtung abgebrochen wurde;

Fig. 3 eine ebenfalls abgebrochene Ansicht dieser Einrichtung, in Richtung der Bewegung des Gerätes gesehen;

Fig. 4 einen schematischen querschnitt durch die Einrichtung gemäß der Linie IV-IV in Fig. 3, wobei der zur Drehlagerung des Trägers vorgesehene Galgen in einer Seitenansicht ersichtlich ist;

Fig. 4A einen der Fig. 4 entsprechenden schematischen querschnitt durch den Träger, nun jedoch im Bereich des Geräte-Tragschlittens (Linie IVA in Fig. 3);

Fig. 4B eine Stirnansicht des Trägers der Einrichtung, zur Veranschaulichung der Abstützung des äußeren Trägerendes auf dem Boden mit Hilfe von Rädern;

Fig. 5 eine schematische Darstellung einer landwirtschaftlich genutzen Fläche in Draufsicht, wobei eine Bearbeitung längs zweier ineinander verlaufender spiralförmiger Bahnen erfolgt;

Fig. 6 in einer Draufsicht ähnlich Fig. 2 eine abgewandelte Einrichtung gemäß der Erfindung, mit einer Endlos-Kette als Steuereinrichtung für den GeräteTragschlitten;

Fig. 6A eine Detail-Ansicht gemäß der Linie VIA in Fig. 6, zur Veranschaulichung der Fixierung der Kette am Tragschlitten;

Fig. 7 eine schematische schaubildliche besicht eines Trägers mit drei zum Transport zusammengeklappten Trägersektionen;

Fig. 8 eine schematische Draufsicht auf den Träger gemäß Fig. 7 im zusammengeklappten Zustand;

Fig. 9 ein schematische Teil-Draufsicht auf diesen Träger gemäß Fig. 7 und 8, nun jedoch im ausgeklappten oder Betriebs-Zustand; und

Fig. 10 eine der Fig. 8 ähnliche schematische Draufsicht auf einen Träger mit fünf Trägersektionen im zusammengeklappten Zustand.

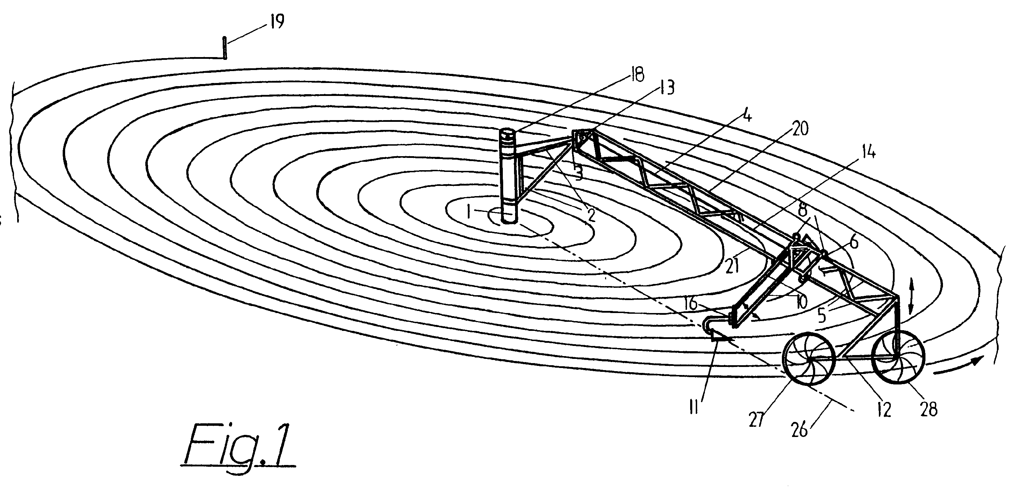

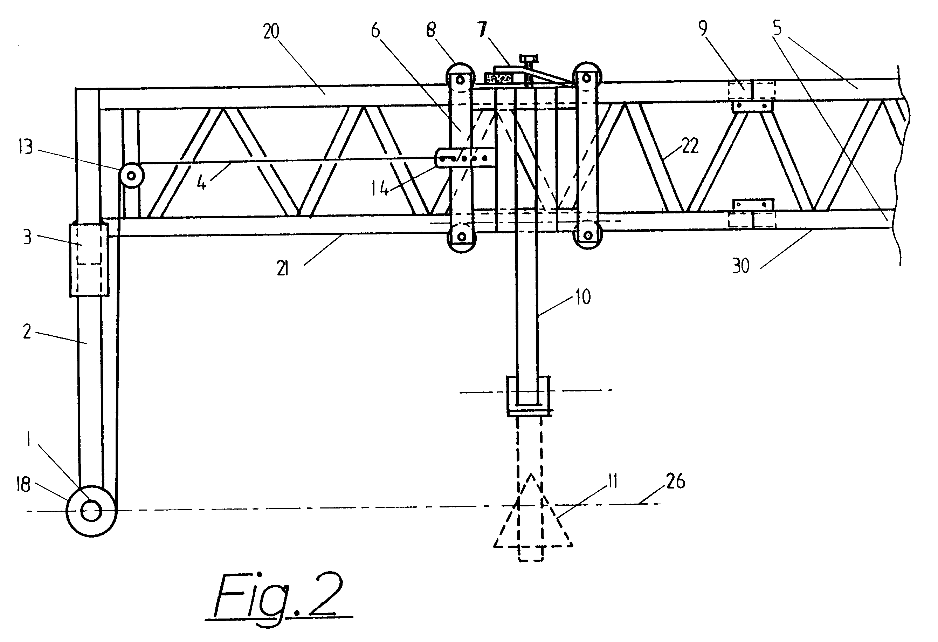

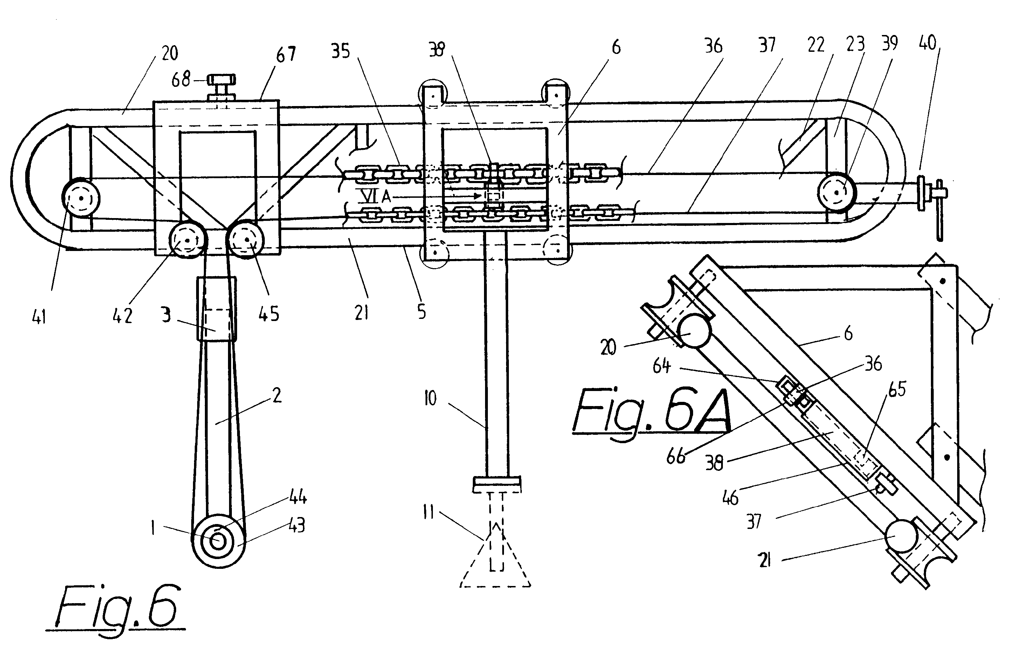

Mit der vorliegenden Einrichtung erfolgt eine Bearbeitung von landwirtschaftlich genutzten Flächen längs spiralfömiger Bahnen um einen Mittelpfahl 1 herum, der in der Mitte der Nutzfläche, nachstehend der Einfachheit halber auch kurz Feld genannt, angebracht wird, vgl. Fig. 1. be diesem Mittelpfahl 1 ist ein konsolenartiger Galgen 2 drehbar gelagert, und an diesem Galgen 2 ist über ein Schwenklager 3 mit einer Schwenkachse senkrecht zur Achse des Mittelpfahls 1, d.h. normalerweise mit horizontaler Schwenkachse, ein länglicher Träger 5 im rechten Winkel zur Ebene des Galgens 2 angeschlossen, vgl. außer Fig. 1 auch Fig. 2 oder Fig. 6. Der Träger 5 ist beispielsweise als ebener Pachwerksträger ausgebildet und trägt einen Geräte-Tragschlitten 6, der längs des Trägers 5 verfahrbar ist, wie nachstehend noch näher erläutert wird, und an dem ein Steuerorgan, wie ein Seil 4 gemäß Fig. 1 bis 4 oder vorzugsweise eine Kette 35 gemäß Fig. 6, befestigt ist.

Gemäß Fig. 1 und 2 ist das Seil 4 über eine Umlenkrolle 13 am inneren Ende des Trägers 5, im Bereich der Befestigung am Galgen 2, und von dieser Umlenkrolle 13 zum Mittelpfahl 1 hin geführt.

Der Tragschlitten 6 ist mit einer in Fig. 2 gezeigten Bremse 7, beispielsweise mit einer am Träger 5 anliegenden, von einem Schwenkhebel getragenen Bremsbacke und einer dem Schwenkhebel zugeordneten Stellschraube zur Einstellung der Bremskraft, versehen, um im Betrieb das Seil 4 immer durch die dem Seilzug entgegenwirkende Bremskraft straff gespannt zu halten. Eine solche Bremse erübrigt sich jedoch im Fall einer Steuereinrichtung mit einer Endlos-Kette 35, die in Fig. 6 gezeigt ist und nachstehend noch näher erläutert werden wird.

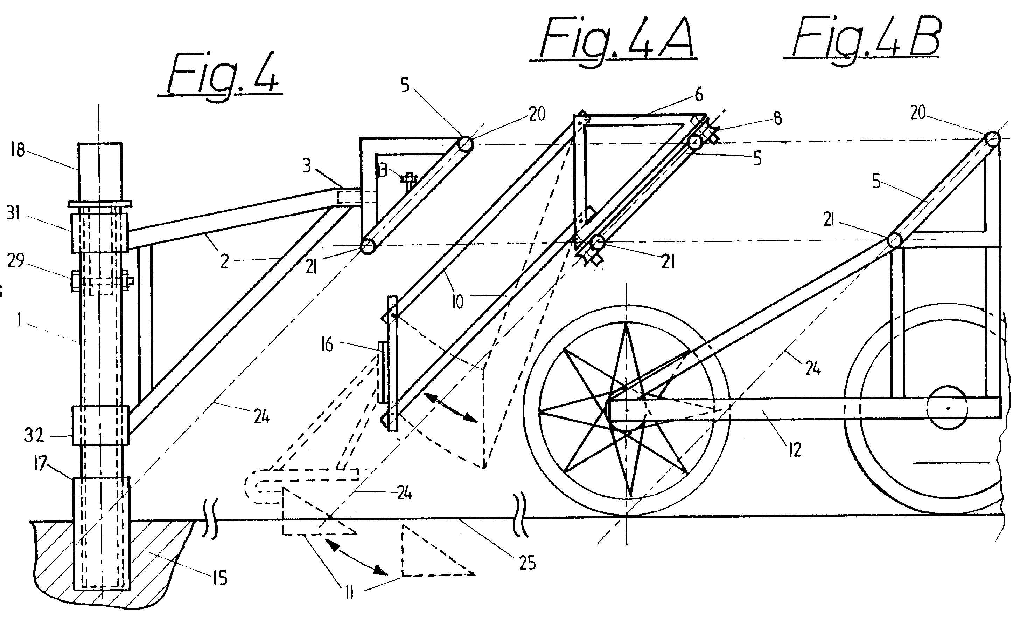

Der Tragschlitten 6 besteht beispielsweise im wesentlichen aus einer Rahmenkonstruktion, an der in den Eckbereichen Laufrollen 8 mit schräg nach unten abstehenden Achsen frei drehbar gelagert sind. Die Mantelfläche dieser Rollen 8 ist dem Querschnitt von Längsrohren 20, 21 des Trägers 5 angepaßt, vgl. insbesondere die Darstellung in Fig. 4A, wobei die Rollen 8 außen an diesen Längsrohren 20, 21 abrollen. Zwischen den Längsrollen 20, 21 sind zur Bildung des Fachwerkträgers Streben 22, 23 (s. auch Fig. 6) angebracht. Die durch die beiden Längsrohre 20, 21 festgelegte Ebene 24 (s. Fig. 4) verläuft schräg zum Boden 25, und diese Ebene 24 schneidet im wesentlichen die Achse des Mittelpfahls 1 in Bodenhöhe, wobei weiters vorzugsweise die Stelle, an der die Bearbeitung des Bodens 25 mit einem am Tragschlitten 6 befestigten Gerät 11, z.B. einem Pflug, erfolgt, ebenfalls an der Schnittstelle dieser Ebene 24 mit dem Boden 25 liegt, vgl. auch Fig. 4A. Die Schnittlinie der Ebene 24 mit dem Boden 25 entspricht somit einer vom Mittelpfahl 1 ausgehenden Radiuslinie 26, die in Fig. 1 und 2 gestrichelt eingezeichnet ist, und die parallel zum Träger 5 verläuft. Bei einer solchen Anordnung ist eine optimale Aufnahme der bei der Bodenbearbeitung auftretenden Kräfte bzw. Reaktionskräfte gewährleistet. Weiters ist durch die Anordnung des Gerätes oder Werkzeuges 11 auf einem solchen Radius 26 (wobei die Bewegungsrichtung des Gerätes 11 senkrecht zum Radius verläuft) sichergestellt, daß am Gerät 11 keine seitlichen Kräfte auftreten, die zu unerwünschten Belastungen der Geräteaufhängung, des Schlittens 6 und des Trägers 5 führen könnten.

Im einzelnen ist das Gerät 11 mit Hilfe eines Parallelogrammlenkers 10 am Schlitten 6 angelenkt, wobei am Parallelogrammlenker 10 ein Geräte- oder Werkzeugaufnahme 16, z.B. in Form einer Platte, vorgesehen ist, an der das Gerät 11 (bzw. das Gerät tragende Arme) beispielsweise mittels Bolzen befestigt wird, was aber in der Zeichnung nicht näher veranschaulicht ist. Aus Fig. 4A ist aber ersichtlich, daß der Parallelogrammlenker 10 und damit das Bearbeitungsgerät 11 relativ zum Träger 5 bzw. Schlitten 6 schwenkbar ist, wie durch Doppelpfeile angegeben ist. Dadurch ist ein selbsttätiges Ausweichen des Gerätes 11 bei örtlich unebenem Boden 25 möglich.

Im übrigen ist eine Anpassung an Unebenheiten auch durch Auf- und Abschwenken des Trägers 5 relativ zum Galgen 2, zufolge der Schwenkverbindung 3, möglich, vgl. insbesondere die Darstellung in Fig. 1, Fig. 2 und Fig. 4.

Am äußeren Ende des Trägers 5 ist beispielsweise ein Stützgestell 12 mit Rädern 27, 28 angebracht, die am Boden laufen und den Träger 5 abstützen. Dabei ist das bezogen auf die Fahrtrichtung (s. Pfeil in Fig. 1) hintere Rad 27 vorzugsweise derart angeordnet, daß die Stelle seines Bodenkontaktes wiederum auf der parallel zum Träger 5 verlaufenden, vom Mittelpfahl 1 ausgehenden Radiuslinie 26 liegt, so daß an diesem Rad 27 keine unerwünschten Seitenkräfte im Betrieb auftreten können. Das vordere Rad 28, das vorzugsweise direkt unterhalb des äußeren Endes des Trägers 5 angeordnet ist, um so unmittelbar die Trägerlast aufnehmen zu können, kann zur Ausschaltung unerwünschter Seitenkrafteffekte mit einer an sich herkömmlichen, in der Zeichnung nicht näher dargestellten Nachlaufeinrichtung ausgerüstet sein, wie sie etwa von Kraftfahrzeugen oder aber von Bodenbearbeitungswalzen her bekannt ist, so daß das vordere Rad 28 selbsttätig immer der äußeren kreisförmigen Bahn folgt.

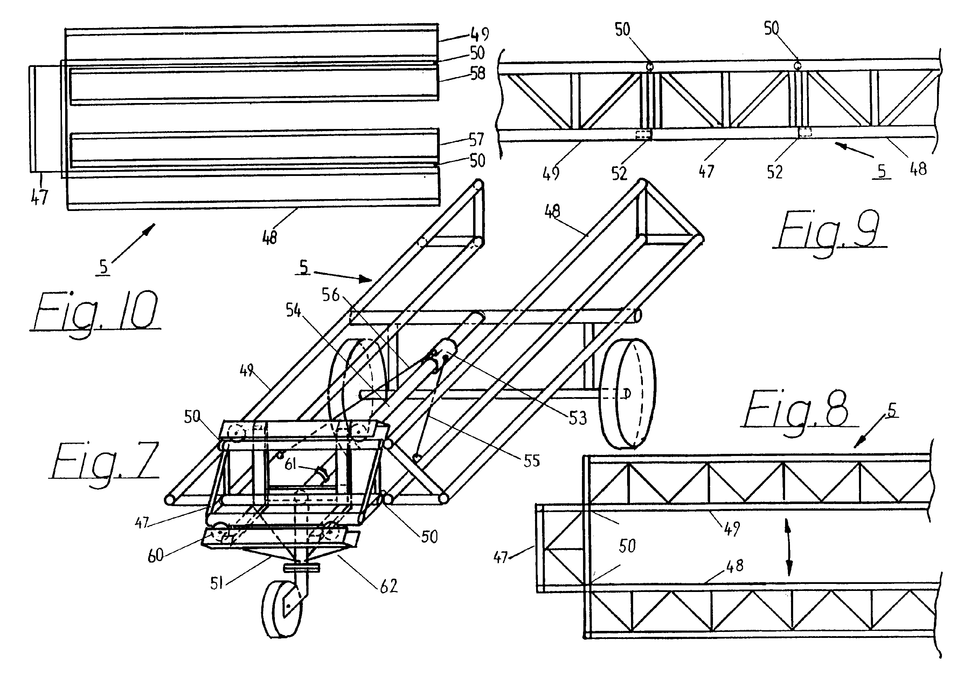

Es sei erwähnt, daß in Fig. 4B ein gegenüber Fig. 1 etwas modifiziertes Stützgestell 12 mit Bodenlaufrädern veranschaulicht ist. In Fig. 6 wie auch in Fig. 8 und 10 wurde ferner ein solches Stützgestell zwecks besserer Übersichtlichkeit in der Darstellung überhaupt weggelassen.

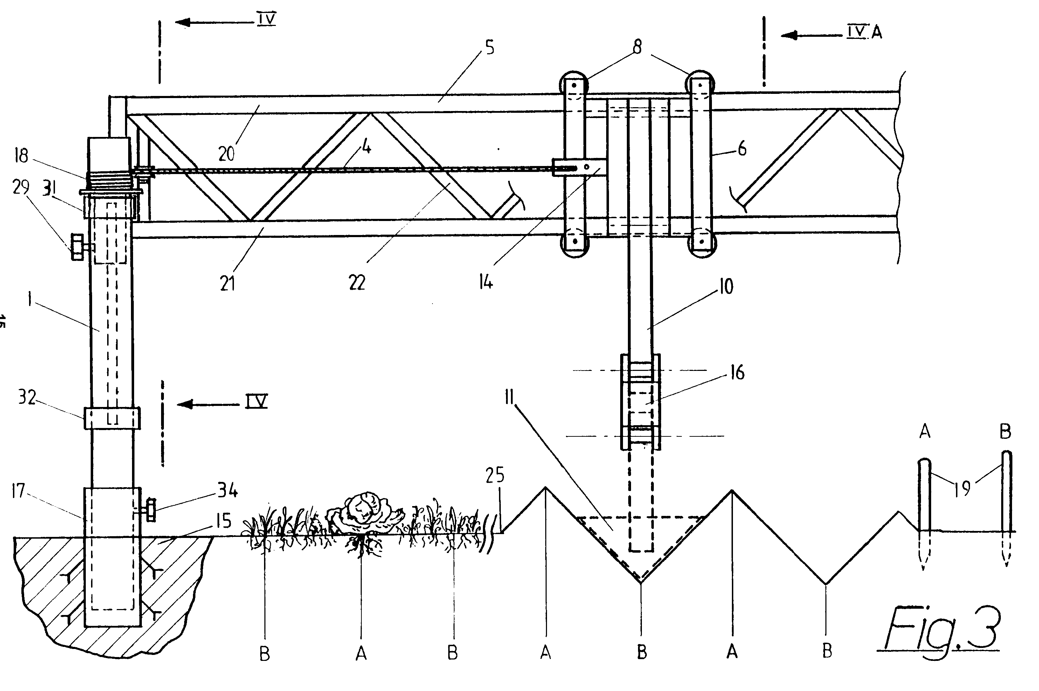

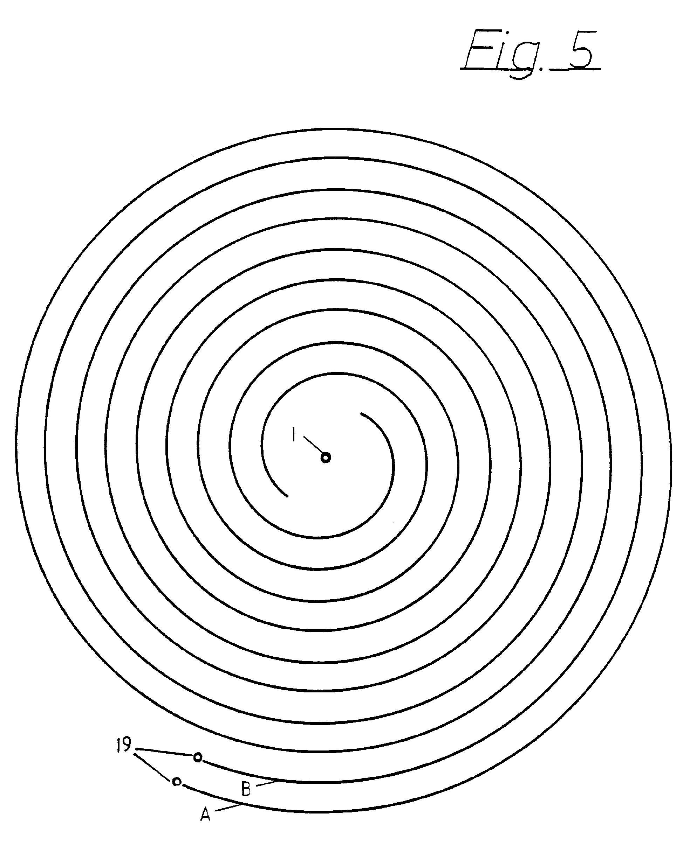

Gemäß Fig. 1 bis 3 ist das Seil 4 (das in den Darstellungen von Fig. 4, Fig. 4A und Fig. 4B der besseren Übersicht wegen weggelassen wurde) wie erwähnt am Tragschlitten 6 verstellbar, beispielsweise über eine Lochschiene bei 14 (s. außer Fig. 1 insbesondere auch Fig. 2 und Fig. 3) befestigt, und es ist mit dem anderen, inneren Ende an einer Aufwickelspule 18 fixiert, die auf den Mittelpfahl 1 drehfest aufgesetzt ist. Wenn sich daher der Träger 5 um dem Mittelpfahl 1 herum dreht, wird das Seil 4 auf der Aufwickelspule 18 aufgewickelt, wodurch der Tragschlitten 6 selbsttätig längs des Trägers 5 nach innen gezogen wird, so daß das an ihm befestigte Gerät 11 der erwähnten spiralförmigen Bahn, gemäß einer Pflanzenreihe A (oder B, vgl. Fig. 3), folgt. Die Aufwickelspule 18 ist dabei mittels einer Schraube oder eines Splints 29 am Mittelpfahl 1 befestigt (s. Fig. 3), und sie kann vom Mittelpfahl 1 abgenommen und um 180° um ihre eigene Achse verdreht wieder auf den Mittelpfahl 1 aufgesetzt und an ihm fixiert werden, so daß eine andere spiralförmige Bahn B (oder A) für das Gerät 11 ermöglicht wird, deren Gänge - z.B. entsprechend der Pflanzenreihe B - mit den Gängen der ersten spiralförmigen Bahn - entsprechend der Pflanzenreihe A - abwechseln. Demgemäß entspricht der Abstand zwischen den Reihen A und B dem halben Umfang der Aufwickelspule 18. Eine solche Bodenbearbeitung gemäß zweier Spiralen A, B um einen Mittelpfahl 1 herum ist schematisch in einer Draufsicht in Fig. 5 dargestellt, wobei auch ersichtlich ist, daß die Anfänge der spiralförmigen Bahnen durch Markierunspfähle 19 (s. auch Fig. 3) markiert werden können.

Wenn mehrere Aufwickelspulen 18 vorgesehen werden, die voneinander verschiedene Durchmesser haben, so können verschiedene Ganghöhen und damit der jeweiligen Kulturart entsprechende unterschiedliche Reihenabstände erzielt werden. Als Beispiel sei angegeben, daß bei einem Durchmesser der Aufwickelspule von 10 cm der Reihenabstand 31,4 cm beträgt, wobei im Falle eines Aufsetzens der Aufwickelspule auf den Mittelpfahl um 180° versetzt der Abstand zwischen den einzelenen Gängen der verschiedenen Reihen die Hälfte, also 15,7 cm, beträgt.

Eine solche Bearbeitung des Bodens in zwei oder mehreren spiralförmigen Reihen ermöglichen eine besonders gute Ausnutzung des Bodens, wobei beispielsweise in der einen Reihe, etwa A, eine Bearbeitung durch Pflügen, Säen, Walzen oder dergl. erfolgen kann und darauffolgend in der anderen Reihe, B, mit den dazwischenliegenden Gängen, ein Aufhacken des Bodens, Lockern oder aber ein Unkrautmähen usw. durchgeführt wird. Dabei kann, wenn das Gerät einmal auf die richtige Reihe eingestellt wurde, der Arbeitsgang selbsttätig ablaufen, wobei nur eine Kontrolle im Falle eines Antriebsmotors für die Einrichtung oder die Führung eines Zugtieres, das am äußeren Ende des Trägers eingespannt wird, erforderlich ist. Das Gerät 11 kann dabei mit einer entsprechend gewählten Gewichtsbelastung versehen werden, wie etwa im Fall des Pflügens, um so die richtige Eindringtiefe des Gerätes in den Boden sicherzustellen.

Wenn für die Drehbewegung des Trägers 5 um den Mittelpfahl 1 herum ein eigener Antrieb vorgesehen wird, so kann dieser an sich im Bereich des Mittelpfahls 1 untergebracht und mit dem Galgen 2 gekuppelt werden. In diesem Fall ist jedoch ein Motor mit einem verhältnismäßig hohen Drehmoment notwendig. Es ist daher vorzuziehen, einen Antriebsmotor am äußeren Ende des Trägers 5 anzubringen, wobei die Antriebsrichtung insbesondere dem in Fig. 1 hinteren Rad 27 zugeordnet wird. Die Antriebseinrichtung, etwa ein Benzin- oder Dieselmotor oder ein Elektromotor, insbesondere ein mit Sonnenenergie betriebener Elektromotor, kann dabei auf an sich herkömmlicher Weise am Stützgestell 12 befestigt und mit dem Rad 27 gekuppelt werden.

Der Träger 5 kann je nach Feldgröße in einem Stück oder aber vorzugsweise mehrteilig, mit Trägersektionen 30 (s. Fig. 2), ausgeführt sein, wobei gemäß Fig. 2 die einzelnen, beispielsweise gleich langen Sektionen 30 bei 9 ineinandergesteckt und mit Hilfe von Verbindungsschellen miteinander verbunden werden. Beispielsweise beträgt die Länge einer jeden solchen Trägersektion 6 m, wobei mit einem 6 m langen Träger 5 eine Fläche von ungefähr 113 m², mit einem 12 m langen Träger 5 eine Fläche von 452 m², mit einem 18 m langen Träger 5 eine Fläche von ungefähr 1017 m², und mit einem 24 m langen Träger 5 eine Fläche von 1808 m² bearbeitet werden kann.

Eine andere abgewandelte Trägerkonstruktion mit klappbaren Sektionen wird nachstehend anhand der Fig. 7 bis 10 noch näher erläutert.

Mit der beschriebenen Einrichtung können auch mehrere Felder hintereinander bearbeitet werden, wobei der Träger 5 gegebenenfalls zerlegt und zusammen mit dem Mittelpfahl 1 und dem Stützgestell 12 sowie den Geräten 11 und dem Tragschlitten 6 zum jeweiligen Einsatzort verfahren werden kann.

Dabei ist es für eine rasche Montage und Demontage zweckmäßig, im Boden an jenen Stellen, wo der Mittelpfahl 1 anzubringen ist, bleibend jeweils einen Sockel 17 anzubringen, wobei der Sockel 17 beispielsweise in einem Fundament 15 fixiert wird und so eine stabile Lagerung für den einfach einzusteckenden Mittelpfahl 1 bildet.

Der Galgen 2 kann beispielsweise mit Hilfe von zwei in axialem Abstand im Mittelpfahl 1 gelagerten Hülsen 31, 32 am Mittelpfahl 1 gelagert sein, vgl. insbesondere Fig. 3 und 4.

Im Fall der Befestigung des Mittelpfahls 1 in einem Sockel 17 ist dafür zu sorgen, daß der Mittelpfahl 1 gegen ein Verdrehen gesichert wird, was beispielsweise mit Hilfe einer durch den Sockel 17 hindurchgeschraubten Schraube 34 (Fig. 3) erzielt werden kann.

Mit der beschriebenen Einrichtung ist eine Bearbeitung beim Anbau der verschiedensten Kulturen, wie Getreide, Gemüse, Kräuter, und zwar auch in Mischkultur, möglich. Dabei ist ein Anbau in mehreren Reihen, zu verschiedenen Zeiten, möglich, so daß nach dem Abernten einer Reihe, beispielsweise A, noch die Mittelreihe, beispielsweise B, voll bewachsen ist (Fig. 3 und 5). Sodann kann in der abgeernteten Reihe A neu gesät werden. Wenn die neue Saat gut gekeimt hat, kann dann auch die Mittelreihe abgeerntet werden, wodurch die neue Kultur (Reihe A) wieder Licht und gegebenenfalls Mulch erhält. Bei Getreide ist es zweckmäßig, den Anbau nur gemäß einer Spirale, ohne Mittelreihe, vorzunehmen.

Bei der Durchführung der verschiedenen Arbeiten mit den einzelnen Geräten 11 gleicht der Parallelogrammlenker 10 örtliche Bodenunebenheiten aus, wobei das Gerät 11 immer in der richtigen Lage, parallel zum Boden 25, gehalten wird. Durch die einseitige Lagerung des Trägers 5 können auch relativ steile Grundstücke bebaut werden, wobei überdies der am Galgen 2 auf und ab schwenkbar gelagerte Träger 5 bei Abstützung auf den Rädern am äußeren Ende (beispielsweise die Räder 27, 28) einen zusätzlichen Ausgleich bei verschiedenen Bodenneigungen ermöglicht.

Im Falle der Bearbeitung von mehreren spiralförmigen Feldern nebeneinander ergeben sich geringfügige Zwischenräume zwischen den Feldern, die ungefähr 5% bis 10 % der Gesamtfläche ausmachen. Diese Zwischenräume sind als durchaus wichtige Nischen anzusehen, die mit als Schutz dienenden Sträuchern, Bäumen usw. bepflanzt werden können.

Als Gerät 11 können beispielsweise Pflüge, Bodenlockerer, Eggen, Sägeräte und dergl. eingesetzt werden.

Gemäß Fig. 6 erfolgt die Steuerung des Tragschlittens 6 längs des Trägers 5, um das Arbeitsgerät 11 wie beschrieben längs der spiralförmigen Bahn zu führen, mit Hilfe einer Endlos-Kette 35. Diese Endlos-Kette 35 kann mit dem einen längs des Trägers 5 verlaufenden Trum 36 oder mit dem anderen längs des Träger 5 verlaufenden Trum 37 am Tragschlitten 6 fixiert werden, wozu eine in Fig. 6 nur schematisch angedeutete Kupplungsvorrichtung 38 dient, die auf eine an sich herkömmliche, beliebige, dem Fachmann geläufige Weise, z.B. als Klemmkupplung, ausgebildet sein kann. Beispielsweise verbindet diese Kupplungsvorrichtung 38 das in Fig. 6 obere Kettentrum 36 mit dem Tragschlitten 6, sie könnte jedoch auch verstellt werden, um das untere Kettentrum 37 fest mit dem Tragschlitten 6 zu kuppeln und dabei das obere Kettentrum 36 zu lösen.

Gemäß Fig. 6A weist die Ketten-Kupplungsvorrichtung 38 beispielsweise einen Schieber 64 auf, in dem an jedem Ende ein zu seiner Längsachse senkrechter, schmaler Ausschnitt 65 vorgesehen ist, in dem die Kette 35 mit einem aufrechten Kettenglied 66 - das in dieser Lage gerade in den Ausschnitt paßt - eingehängt wird; die benachbarten, querliegenden Kettenglieder können nicht durch den Schieber 64 rutschen. Der Schieber 64 ist in einer Querführung 46 am Tragschlitten 6 verstellbar.

Die Endlos-Kette 35 läuft vom Tragschlitten 6 zum äußeren Ende des Trägers 5 hin, wo eine Umlenkrolle 39 vorgesehen ist. An diesem äußeren Trägerende ist weiters nach eine Ketten-Spannvorrichtung 40 vorgesehen, um die Kette 35, beispielsweise durch Verschieben der äußeren Umlenkrolle 39 in Richtung vom Tragschlitten 6 weg nach außen, zu spannen. Eine solche Spannvorrichtung 40 ist an sich dem Fachmann bekannt und bedarf hier keiner weiteren Erläuterung.

Am inneren Ende des Trägers 5 ist ebenfalls eine Ketten-Umlenkrolle 41 vorgesehen, von der die Endlos-Kette 35 über eine weitere Umlenkrolle 42 im wesentlichen den Galgen 2 entlang zu einem am Mittelpfahl 1 fest angebrachten Kettenrad 43 oder 44 und von da wieder längs des Galgens 2 zurück zu einer Umlenkrolle 45 am Träger 5 geführt ist. Die Kettenräder 43, 44 sind am Mittelpfahl 1 übereinanderliegend angebracht und verschieden groß, um beim Drehen des Trägers 5 um den Mittelpfahl 1 herum unterschiedliche Ganghöhen für die spiralförmige Bahn des Gerätes 11, entsprechend den unterschiedlichen Umfängen der Kettenräder 43, 44, zu ermöglichen.

Selbstverständlich können auch mehr als zwei Kettenräder 43, 44, wie dargestellt, am Mittelpfahl 1 vorgesehen werden, und überdies ist es auch möglich, einen größeren Satz an Kettenrädern vorzusehen und die Kettenräder auswechselbar am Mittelpfahl 1 anzubringen.

Gemäß Fig. 6 ist der Träger 5 in einem Führungsrahmen 67 verschiebbar und mit einer Feststellschraube 68 darin feststellbar gelagert; der Führungsrahmen 67 ist mit dem Galgen 2 über das Schwenklager 3 verbunden. Aufgrund dieser Ausbildung kann die wirksame Länge des Trägers 5 (vom Galgen 2 bzw. Mittelpfahl 1 zum äußeren Trägerende) auf einfache Weise entsprechend der Feldgröße eingestellt werden, wobei ein Teil des Trägers 5, mit der Umlenkrolle 41, auf der gegenüberliegenden Seite des Rahmens 67 übersteht. Der Führungsrahmen 67 trägt auch die Umlenkrolle 42 und 45.

Bei der anhand der Fig. 6 beschriebenen, besonders bevorzugten Ausführungsform ergibt sich eine zwangsläufige Steuerung des Gerätes 11 am Träger 5 nach außen oder nach innen, je nachdem, ob das obere Kettentrum 38 oder das untere Kettentrum 37 am Tragschlitten 6 festgeklemmt wird. Dabei kann sich, wie ersichtlich, die vorstehend anhand der Fig. 2 erläuterte Bremse 7 erübrigen.

Wie bereits weiter oben angedeutet kann der Träger 5 aus mehreren Trägersektionen bestehen, die durch Zusammenstecken miteinander kuppelbar sind, oder aber es können auch klappbare Trägersektionen vorgesehen werden. Die klappbare Bauweise wird im Hinblick auf die besonders einfache Montage bzw. Demontage besonders bevorzugt, und zwei Beispiele hiefür sind in den Fig. 7 bis 9 bzw. in Fig. 10 veranschaulicht.

Bei beiden Beispielen besteht der Träger 5 aus einem verhältnimäßig kurzen Mittelstück 47, an dem zwei inbesondere gleich lange Trägersektionen 48, 49 mit Hilfe von vertikalen Scharniergelenken 50 angelenkt sind.

Wie aus Fig. 7 und 8 ersichtlich ist, kann damit der Träger 5 in eine in Draufsicht ungefähr U-förmige Transportstellung, mit vom Mittelstück 47 weggeklappten Trägersektionen 48, 49, gebracht werden; zum Transport kann dabei ein in Fig. 7 veranschaulichter Transportwagen 51, beispielsweise in Form eines Anhängers, vorgesehen werden, der mit nicht näher veranschaulichten Halterungen zur Fixierung des Trägers sowie der weiteren Ausrüstungsgegenstände (wie insbesondere des Galgens, des Tragschlittens, des Stützgestells und des jeweiligen Arbeitsgerätes) ausgerüstet ist. Der Tragschlitten kann sich dabei in dieser Transportstellung des Trägers 5 auf dem Mittelstück 47 befinden, was aber in Fig. 7 und 8 (wie auch in Fig. 10) nicht näher veranschaulicht ist.

Zum Zusammenbau wird dieser Transportwagen 51 am Feldrand in ungefähr rechtem Winkel zu einem vom Mittelpfahl ausgehenden Radius eingerichtet und mit Hilfe von Feststellbremsen fixiert, wonach die beiden Trägersektionen 48, 49 an das Mittelstück 47 angeklappt werden. Die Trägersektionen 48, 49 werden sodann mit Kupplungsorganen, wie etwa in Fig. 9 ganz schematisch bei 52 angedeutet ist, z.B. mit Steckbolzen oder dergl., am Mittelstück 47 fixiert. Der Träger 5 nimmt nun seine in Fig. 9 veranschaulichte gerade Arbeitslage ein, wobei er ungefähr in Richtung zum Mittelpfahl verläuft. In dieser Arbeitsstellung ragt der Träger 5 den halben Radius in das zu bearbeitende Feld hinein, wogegen die andere Trägerhälfte nach außen ragt. Es wird nun am inneren Ende des Trägers 5 beispielsweise ein Rollenbock untergestellt, wonach die Halterung des Träger-Mittelstückes 47 am Transportwagen 51 gelöst wird, so daß der Träger 5, gegebenenfalls mittels eines Handrades oder einer Kurbel (nicht dargestellt), längs des vorderen Teils 62 des Transportwagens 51 in Richtung Mittelpfahl gezogen werden kann. Der Wagenteil 62 bildet dabei eine Führung für den Träger 5, wobei auch Führungsrollen 60 vorgesehen sein können, um den Träger 5 leichter verschieben zu können. Nach der Anbringung des Galgens am Mittelpfahl und nach dem Ankuppeln des Trägers 5 am Galgen ist der Aufbau beendet. Dabei kann beim fertigen Aufbau der Wagenteil 62 selbst das äußere Träger-Stützgestell (12 in Fig. 1) bilden, wozu er vom übrigen Transportwagen 51 mittels einer nur schematisch dargestellten Schnellkupplung 61 gelöst wird.

Der Abbau der Trägerkonstruktion erfolgt, wie unmittelbar einzusehen ist, in umgekehrter Reihenfolge.

In Fig. 7 ist weiters eine Führungsbuchse 53 veranschaulicht, die auf einem Mittelrohr 54 des Transportwagens 51 gleitet und über angelenkte Stangen 55 bzw. 56 mit den Trägersektionen 48, 49 gelenkig verbunden ist. Durch dieses Gestänge 55, 56 samt Führungsbuchse 53 wird erreicht, daß die beiden Trägersektionen 48, 49 gleichzeitig relativ zum Mittelstück 47 verschwenkt werden, so daß bei Verschwenken der einen Trägersektion, z.B. 48, die andere Trägersektion, z.B. 49, selbsttätig mitverschwenkt wird. Selbstverständlich muß das Gestänge vom Transportwagen 51 oder aber vorzugsweise vom Träger 5 lösbar sein, um den Träger 5 vom (übrigen) Transportwagen 51 abnehmen zu können.

Gemäß Fig. 10 ist der Träger 5 um zwei weitere Trägersektionen 57, 58 verlängert, die an den hinteren Enden der Trägersektionen 48, 49 angelenkt sind und in der eingeklappten Transportstellung gemäß Fig. 10 in das Innere des "U", das durch die Trägerteile 47 bis 49 gebildet wird, ragen. Zur Anlekung der Trägersektionen 57, 58 an den Trägersektionen 48, 49 können wieder Scharniergelenke 50 vorgesehen sein. Auch ist aus Fig. 10 ersichtlich, daß die Länge des Mittelstückes 47 des Trägers 4 ungefähr gleich der Trägerbreite ist, so daß in der eingeklappten Transportstellung gemäß Fig. 10 eine äußerst kompakte Konfiguration erhalten wird.

Auch in der Ausführungsform gemäß Fig. 10 kann durch ein Gestänge ein gleichzeitiges Aus- und Einklappen der Trägersektionen 48, 49 bzw. 57, 58 vorgesehen werden, wie dies vorstehend anhand der Fig. 7 beschrieben wurde.

Wenn die Erfindung vorstehend anhand von besonders vorteilhaften Ausführungsformen näher erläutert wurde, so sind doch selbstverständlich weitere Abwandlungen und Modifikationen im Rahmen der Erfindung möglich. So ist est beispielsweise denkbar, als Träger 5 anstatt eines ebenen Fachwerkträgers einen beliebigen anderen Träger, z.B. einen räumlichen Fachwerkträger oder einen Profilträger, etwa mit I-Querschnitt, vorzusehen. In der Ausführungsform gemäß Fig. 1 bis 3 könnte das Seil 4 auch vom Tragschlitten 6 weg zum äußeren Ende des Trägers 5 und von dort zurück zum inneren Ende und zum Mittelpfahl 1 geführt sein, wodurch der Tragschlitten 6 mit dem Gerät 11 beim Umlaufen des Trägers 5 um den Mittelpfahl 1 und entsprechendem Aufwickeln des Seiles 4 auf der Aufwickelspule 18 am Träger 5 von innen nach außen anstatt von außen nach innen gezogen wird. Ferner ist es denkbar, den Träger 5 über nur ein Rad am äußeren Ende am Boden 25 abzustützen (s. den Wagenteil 62 gemäß Fig. 7) oder aber überhaupt frei auskragen zu lassen, was insbesondere bei kürzeren Längen und einer ausreichend stabilen Drehlagerung am Mittelpfahl 1 durchaus möglich ist. Schließlich können, insbesondere bei längeren Trägern 5, auch mehrere Tragschlitten 6 am jeweiligen Träger angebracht und mit einer eigenen Steuereinrichtung, mit einem eigenen Seil 4 oder einer eigenen Kette 35, gekuppelt werden, um so ein paralleles Arbeiten von Geräten 11 zu ermöglichen.

## Patentansprüche

1. Einrichtung zum Bearbeiten von landwirtschaftlichen Nutzflächen, mit einem länglichen, an einem Mittelpfahl (1) drehbar gelagerten Träger (5), an dem wenigstens ein in Längsrichtung des Trägers verfahrbarer Geräte-Tragschlitten (6) angebracht ist, der mit einer ihn bzw. ein an ihm befestigtes Gerät (11) bei Drehung des Trägers (5) längs einer allgemein kreisförmigen, insbesondere spiralförmigen Bahn um den Mittelpfahl (1) herum steuernden Steuereinrichtung (4 oder 35, 18) gekuppelt ist, dadurch gekennzeichnet, daß der Träger (5) an einem am Mittelpfahl (1) drehbar gelagerten Galgen (2) befestigt ist, der gemäß einer vom Mittelpfahl (1) ausgehenden Radialebene angeordnet ist, wobei der Träger (5) mit seiner Längsachse in Abstand vom Mittelpfahl (1) verlaufend am Galgen (2) im rechten Winkel zu diesem angeschlossen ist.

2. Einrichtung nach Anspruch 1, dadurch gekennzeichnet, daß der Träger (5) am Galgen (2) vertikal schwenkbar gelagert ist.

3. Einrichtung nach Anspruch 1 oder 2, dadurch gekennzeichnet, daß der Galgen (2) über zwei in axialem Abstand übereinander auf den Mittelpfahl (1) aufgeschobene Hülsen (31, 32) am Mittelpfahl (1) gelagert ist.

4. Einrichtung nach einem der Ansprüche 1 bis 3, dadurch gekennzeichnet, daß die Steuereinrichtung (4, 18) für den Tragschlitten (6) durch ein Seil (4) gebildet ist, das mit einem Ende am Tragschlitten (6) befestigt ist, längs des Trägers (5) nach innen und über eine Umlenkrolle (13) im Bereich der Verbindung des Trägers (5) mit dem Galgen (2) sowie von dieser Umlenkrolle (13) längs des Galgens (2) zum Mittelpfahl (1) verläuft und dort mit dem anderen Ende an einer am Mittelpfahl (1) drehfest angebrachten Aufwickelspule (18) befestigt ist.

5. Einrichtung nach Anspruch 4, dadurch gekennzeichnet, daß der Tragschlitten (6) eine mit dem Träger (5) in Eingriff stehende, z.B. einstellbare Bremse (7) aufweist.

6. Einrichtung nach Anspruch 4 oder 5, dadurch gekennzeichnet, daß die Aufwickelrolle (18) am Mittelpfahl (1) abnehmbar befestigt ist.

7. Einrichtung nach einem der Ansprüche 4 bis 6, dadurch gekennzeichnet, daß mehrere Aufwickelspulen (18) vorgesehen sind, die verschiedene Durchmesser, entsprechend den jeweiligen Ganghöhen der spiralförmigen Bahn, aufweisen.

8. Einrichtung nach Anspruch 6 oder 7, dadurch gekennzeichnet, daß die Aufwickelspule(n) (18) hinsichtlich des Befestigungspunktes des Seiles (4) in verschiedenen Winkelstellungen am Mittelpfahl (1) fixierbar ist (sind).

9. Einrichtung nach einem der Ansprüche 1 bis 3, bei der die Steuereinrichtung (35, 18) für den Tragschlitten (6) durch eine Endlos-Kette (35) gebildet ist, die mit dem Tragschlitten (6) verbunden und über Umlenkrollen (39, 41) an den Trägerenden geführt ist, dadurch gekennzeichnet, daß die Endloskette (35) über weitere Umlenkrollen (42, 45) und längs des Galgens (2) zu einem am Mittelpfahl (1) drehfest angebrachten Kettenrad (43, 44) geführt ist.

10. Einrichtung nach Anspruch 9, dadurch gekennzeichnet, daß die Endlos-Kette (35) wahlweise mit dem einen oder anderen Trum (36, 37) mit dem Tragschlitten (6) kuppelbar ist.

11. Einrichtung nach Anspruch 9 oder 10, dadurch gekennzeichnet, daß mehrere verschieden große Kettenräder (43, 44) am Mittelpfahl (1) befestigt sind.

12. Einrichtung nach einem der Ansprüche 9 bis 11, dadurch gekennzeichnet, daß am äußeren Ende des Trägers (5) eine Spannvorrichtung (40) für die Kette (35) vorgesehen ist.

13. Einrichtung nach einem der Ansprüche 1 bis 12, dadurch gekennzeichnet, daß am Tragschlitten (6) ein auf und ab schwenkbarer Parallelogrammlenker (10) zur Befestigung der Geräte (11) angebracht ist, der die Geräteposition im wesentlichen auf einer vom Mittelpfahl ausgehenden, parallel zum Träger verlaufenden Radiuslinie (26) festlegt, wobei die Geräteausrichtung dabei senkrecht zu dieser Radiuslinie (26) ist.

14. Einrichtung nach einem der Ansprüche 1 bis 13, dadurch gekennzeichnet, daß der Träger (3) als Fachwerksträger ausgebildet ist, der zwei zueinander parallele Längsrohre (20, 21) aufweist, an denen außen der Tragschlitten (6) mittels Rollen (8) geführt ist, wobei die durch die zwei Längsrohre (20, 21) definierte Ebene (24) den Mittelpfahl (1) im wesentlichen in Bodenhöhe schneidet.

15. Einrichtung nach einem der Ansprüche 1 bis 14, dadurch gekennzeichnet, daß der Träger (5) aus miteinander schwenkbar verbundenen Trägersektionen (47, 48, 49; 57, 58) besteht, wobei an jedem der beiden Enden eines Mittelstücks (47) des Trägers (5) eine im Vergleich zum Mittelstück (47) lange Trägersektion (48, 49) angelenkt ist und die beiden langen Trägersektionen (48, 49) in die gleiche Richtung in eine Transportstellung senkrecht zum Mittelstück (47) umklappbar sind, so daß der Träger (5) in dieser Transportstellung in Draufsicht eine U-Form hat.

16. Einrichtung nach Anspruch 15, dadurch gekennzeichnet, daß an jeder der beiden langen Trägersektionen (47, 48) eine weitere, in das Innere des "U" umklappbare Trägersektion (57, 58) angelenkt ist.

17. Einrichtung nach einem der Ansprüche 1 bis 16, dadurch gekennzeichnet, daß der Träger (5) am äußeren Ende über wenigstens ein auf dem Boden (25) laufendes Rad (27) abgestützt ist, das von einem am Träger (5) angeschlossenen Stützgestell (12) mit seiner Bodenkontaktstelle im wesentlichen auf einer durch den Mittelpfahl (1) verlaufenden, zum Träger (5) parallelen Radiuslinie (26) gehalten ist.

18. Einrichtung nach Anspruch 17, dadurch gekennzeichnet, daß ein Rad (28) zur direkten Aufnahme der Last des Trägers (5) im wesentlichen vertikal unterhalb des äußeren Ende des Trägers (5) angeordnet ist.

**Claims**

1. Apparatus for cultivating agricultural useful areas, comprising an elongate member (5) which is mounted for rotation on a centre post (1) and on which there is disposed at least one implement carriage (6) which is movable in the longitudinal direction of the member and which is coupled to a control means (4 or 35, 18) which, on rotation of the member (5), controls the carriage (6) or an implement (11) fixed thereto, along a generally circular and more particularly spiral path around the centre post (1), characterised in that the member (5) is secured to a bracket (2) mounted for rotation on the centre post (1) and disposed along a radial plane radiating from the centre post (1), the member (5) being connected to the bracket (2) at a right angle therereto with its longitudinal axis extending at a distance from the centre post (1).

2. Apparatus according to claim 1, characterised in that the member (5) is mounted on the bracket (2) so as to be vertically pivotable.

3. Apparatus according to claim 1 or 2, characterised in that the bracket (2) is mounted on the centre post (1) via two axially spaced sleeves (31, 32) fitted one upon the other on the centre post (1).

4. Apparatus according to any one of claims 1 to 3, characterised in that the control means (4, 18) for the carriage (6) is in the form of a cable (4) which is secured to the carriage (6) by one end, extends along the member (5) inwardly and over a deflecting pulley (13) in the zone where the member (5) is connected to the bracket (2), and from said deflecting pulley (13) along the bracket (2) to the centre post (1), where it is secured by its other end to a take-up spool (18) fixed on the centre post (1) so as to co-rotate therewith.

5. Apparatus according to claim 4, characterised in that the carriage (6) has a, for example, adjustable brake (7) in engagement with the member (5).

6. Apparatus according to claim 4 or 5, characterised in that the take-up spool (18) is removably secured to the centre post (1).

7. Apparatus according to any one of claims 4 to 6, characterised in that a plurality of take-up spools (18) are provided, which have different diameters according to the respective pitches of the spiral path.

8. Apparatus according to claim 6 or 7, characterised in that the or each take-up spool (18) can be located in different angular positions on the centre post (1) with respect to the point where the cable (4) is secured.

9. Apparatus according to any one of claims 1 to 3, in which the control means (35, 18) for the carriage (6) is formed by an endless chain (35) which is connected to the carriage (6) and which is trained over deflecting pulleys (39, 41) at the ends of the member, characterised in that the endless chain (35) is trained over other deflecting pulleys (42, 45) and along the bracket (2) to a sprocket wheel (43, 44) disposed on the centre post (1) so as to co-rotate therewith.

10. Apparatus according to claim 9, characterised in that the endless chain (35) can be selectively coupled by either of its runs (36, 37) to the carriage (6).

11. Apparatus according to claim 9 or 10, characterised in that a plurality of sprocket wheels (43, 44) of different sizes are secured to the centre post (1).

12. Apparatus according to any one of claims 9 to 11, characterised in that a tensionning device (40) for the chain (35) is provided at the outer end of the member (5).

13. Apparatus according to any one of claims 1 to 12, characterised in that a vertically pivotable parallelogram link (10) for fixing the implements (11) is mounted on the carriage (6) and locates the position of the implement substantially on a radius line (26) extending from the centre post in parallel relationship to the member, the implement alignement being at right angles to said radius line (26).

14. Apparatus according to any one of claims 1 to 13, characterised in that the member (3) is constructed as a latticework girder comprising two parallel longitudinal tubes (20, 21), on the outside of which the carriage (6) is guided by rollers (8), the plane (24) defined by the two longitudinal tubes (20, 21) intersecting the centre post (1) substantially at ground height.

15. Apparatus according to any one of claims 1 to 14, characterised in that the member (5) consists of pivotally interconnected sections (47, 48, 49; 57, 58), a section (48, 49) which is long in comparison with the central section (47) being articulated on each of the two ends of a central portion (47) of the member (5) and the two long sections (48, 49) being foldable at right angles to the centre portion (47) in the same direction into a transportation position so that in such position the member (5) has the shape of a U in plan view.

16. Apparatus according to claim 15, characterized in that another section (57, 58) foldable into the interior of the "U" is articulated on each of the two long member sections (47, 48).

17. Apparatus according to any one of claims 1 to 16, characterised in that the member (5) is supported at the outer end by at least one wheel (27) which runs on the ground (25) and which is held, by a support frame (12) connected to the member (5), with its ground contact point substantially on a radius line (26) extending through the centre post (1) and parallel to the member (5).

18. Apparatus according to claim 17, characterised;in that a wheel (28) for directly taking the load of the member (5) is disposed substantially vertically below the outer end of the member (5).

## Revendications

1. Engin pour travailler des surfaces agricoles productives, comprenant une poutre (5) de forme allongée, montée pivotante sur un poteau central (1), sur laquelle est disposé au moins un chariot (6) porteur d'un appareil déplaçable dans le sens de la longueur de la poutre et qui est accouplé à un dispositif de commande (4 ou 35, 18) qui confère à ce chariot ou à 1′ appareil (11) fixé à lui, pendant la rotation de la poutre (5), un trajet de forme générale circulaire autour du poteau central (1), en particulier un trajet en spirale, caractérisé en ce que la poutre (5) est fixée à une potence (2) montée pivotante sur le poteau central (1) et qui est disposée suivant un plan radial partant de ce poteau central (1), la poutre (5) étant raccordée à la potence (2) à angle droit par rapport à celle-ci, de manière que son axe longitudinal soit situé à distance du poteau central (1).

2. Engin selon la revendication 1, caractérisé en ce que la poutre (5) est montée oscillante dans le sens vertical sur la potence (2).

3. Engin selon la revendication 1 ou 2, caractérisé en ce que la potence (2) est montée sur le poteau central (1) par deux manchons (31, 32), enfilés à distance axiale l'un au-dessus de l'autre sur le poteau central (1).

4. Engin selon une des revendications 1 à 3, caractérisé en ce que le dispositif de commande (4, 18) pour le chariot porteur (6) est formé par un câble (4), fixé par une extrémité au chariot (6), qui s'étend le long de la poutre (5) vers l'intérieur, passe par une poulie de renvoi (13) dans la zone de liaison de la poutre (5) à la potence (2) et s'étend, à partir de cette poulie de renvoi (13), le long de la potence (2) vers le poteau central, où il est fixé par l'autre extrémité à une bobine d'enroulement (18) fixée sans rotation possible au poteau central (1).

5. Engin selon la revendication 4, caractérisé en ce que le chariot porteur (6) présente un frein (7) qui est en prise avec la poutre (5), par exemple un frein réglable.

6. Engin selon la revendication 4 ou 5, caractérisé en ce que la bobine d'enroulement (18) est amovible vis à vis du poteau central (1).

7. Engin selon une des revendications 4 à 6, caractérisé par la prévision de plusieurs bobines d'enroulement (18) qui ont des diamètres différents, correspondant à des hauteurs de spires respectives du trajet en spirale.

8. Engin selon la revendications 6 ou 7, caractérisé en ce que la ou les bobines d'enroulement (18) peut être fixée ou peuvent être fixées au poteau central (1) à différentes positions angulaires en ce qui concerne le point de fixation du câble (4).

9. Engin selon une des revendications 1 à 3, dans lequel le dispositif de commande (35, 18) pour le chariot porteur (6) est formé par une chaîne sans fin (35) qui est reliée au chariot (6) et passe par des poulies de renvoi (39, 41) aux extrémités de la poutre, caractérisé en ce que la chaîne sans fin (35) passe par des poulies de renvoi supplémentaires (42, 45) et le long de la potence (2) par une roue à chaîne (43, 44), disposée sans rotation possible sur le poteau central (1).

10. Engin selon la revendication 9, caractérisé en ce que la chaîne sans fin (35) est apte à être accouplée sélectivement par l'un ou l'autre brin (36, 37) au chariot porteur (6).

11. Engin selon la revendication 9 ou 10, caractérisé en ce que plusieurs roues à chaîne (43, 44) de tailles différentes sont fixées au poteau central (1).

12. Engin selon une des revendications 9 à 11, caractérisé en qu'un tendeur (40) pour la chaîne (35) est prévu à l'extrémité extérieure de la poutre (5).

13. Engin selon une des revendications 1 à 12, caractérisé en ce qu'un parallélogramme de suspension (10) pour la fixation des appareils (11) est disposé sur le chariot porteur (6) de manière à pouvoir effectuer des mouvements d'articulation de montée et de descente, parallélogramme qui fixe la position de l'appareil essentiellement sur un rayon (26) partant du poteau central et parallèle à la poutre, l'appareil étant orienté à angle droit par rapport à ce rayon (26).

14. Engin selon une des revendications 1 à 13, caractérisé en ce que la poutre (5) est une poutre en treillis comprenant deux tubes longitudinaux parallèles (20, 21), sur lesquels le chariot porteur (6) est guidé extérieurement au moyen de galets (8), le plan (24) défini par les deux tubes longitudinaux (20, 21) coupant le poteau central (1), essentiellement au niveau du sol.

15. Engin selon une des revendications 1 à 14, caractérisé en ce que la poutre (5) est constituée de sections (47, 48, 49; 57, 58) reliées entre elles par des articulations, une section (48, 49) étant articulée sur chacune des deux extrémités d'un tronçon central (47) de la poutre (5) et les deux sections (48, 49), relativement longues comparativement au tronçon central (47), étant rabattables dans le même sens vers une position de transport où elles sont perpendiculaires au tronçon central (47), de manière que la poutre (5), vue de dessus, possède une forme en U dans cette position de transport.

16. Engin selon la revendication 15, caractérisé en ce qu'une section de poutre supplémentaire (57, 58), qui est rabattable à l'intérieur du "U", est articulée à chacune des deux longues sections de poutre (47, 48).

17. Engin selon une des revendications 1 à 16, caractérisé en ce que la poutre (5) est appuyée à l'extrémité extérieure par au moins une roue (27) roulant sur le sol (25) qui est tenue par un bâti d'appui (12) raccordé à la poutre (5), de manière que le point de contact de la roue avec le sol soit situé essentiellement sur un rayon (26) passant par le poteau central (1) et parallèle à la poutre (5).

18. Engin selon la revendication 17, caractérisé en ce qu'une roue (28) est essentiellement disposée verticalement sous l'extrémité extérieure de la poutre (5) pour supporter directement la charge de la poutre (5).

*Fig.1*

*Fig.2*

Fig. 3

Fig.4   Fig.4A   Fig.4B

_Fig. 5_

Fig.6

Fig.6A

EP 0 340 273 B1

Fig. 9

Fig. 8

Fig. 10

Fig. 7